# EUROPEAN PATENT SPECIFICATION

(11) **EP 0 916 886 B1**
(45) Date of publication and mention of the grant of the patent: **04.02.2004**
(21) Application number: 98121096.6
(22) Date of filing: 06.11.1998
(51) Int. Cl.: F16L 21/035

(54) **Fitting for fluid conveying pipings**
Verbindungsstück für Rohrleitungen
Raccord pour conduits

(30) Priority: 17.11.1997 IT MI970814 U; 03.04.1998 IT MI980724
(43) Date of publication of application: 19.05.1999
(73) Proprietor: MURRAY EUROPE S.p.A., I-20090 Trezzano S/N (Milano) (IT)
(72) Inventor: Perotti, Alessandro, 20090 Trezzano S/N (MI) (IT)
(74) Representative: Lecce, Giovanni

(56) References cited:
- CH-A- 412 487
- DE-U- 7 104 371
- GB-A- 2 042 116
- US-A- 3 990 730

## Description

The present invention relates to a fitting for fluid conveying pipings.

More particularly, the present invention relates to a fitting for conveying pressurised fluids, of the quick-fitting type, particularly useful in motor-cars sector.

As is known, in the realisation of circuits wherein a pressurised fluid is caused to flow, there are used as fitting elements, tubular metal bodies, traditionally obtained according to different types. Especially in the systems used in motor-cars, wherein oil or cooling fluid flow, as for instance in the circuits of servomechanism or cooling systems, the basic requirement is to provide an effective and constant sealing in the connection points, in the presence of high pressures, in order to prevent losses that would jeopardise the correct working of said systems.

Known embodiments of the concerned fittings provide for the formation of metal bells or cups or the like, realised near to the mouth of one of the tubular coupling bodies. The coupling of the two tubular bodies is obtained by pressure-fitting by hand of a tubular body into the bell or cup of the other tubular body. The tightness of the fitting is ensured by one or more toric rings or sealing gaskets obtained on the tubular body which couples with the second bell- or cup-shaped tubular body. To ensure the tightness at high pressures, the toric rings or sealing gaskets are housed in respective grooves obtained on either of the tubular bodies of the fitting. To house said toric rings, it is necessary to have a space sufficient for the realisation of the grooves, which involves an elongation of said tubular body with respect to its standard dimensions fixed based on the space available for their housing within the engine or the conditioning or cooling systems. Said variation in the standard size of said tubular element involves assembly problems of the same on special structures. Besides, there also exists an interface problem of said tubular elements with the other components that form as a whole the fluid conveying system. Not last, it is also necessary to take into consideration the further amount of material necessary and therefore the additional costs required by a greater size tubular body. On the other hand, if one only groove should be realised (in back position with respect to the mouth of the tubular element) to house one only toric ring or sealing gasket, not to modify the standard size of the respective tubular element, said fitting would not allow to obtain a particularly effective sealing in the time, at the usual running conditions and with the continuous stresses and vibrations which the circuit is subjected to.

Also the fitting of tubular bodies by means of the respective flanges, at least one of which is fastened to the corresponding tubular body by welding, has the same tightness drawbacks as a progressive loss of its effectiveness takes place following the unavoidable settling that occurs in the connection fixed points, as those corresponding to the welding.

Object of this invention is to obviate the aforesaid drawbacks.

More particularly, object of this invention is to provide a fitting for fluids conveying pipings, in particular pressurised fluids, especially of the quick-fitting type, wherein the tightness needs being particularly effective and lasting in the time, such as not to involve complicated working operations and such as to obtain reliable results in the time.

A further object of the invention is to avoid to increase the length of the tubular body to create the space sufficient to provide grooves to insert corresponding toric rings or sealing gaskets, in order to reduce the amount of material utilised and therefore the production costs, and besides to avoid assembly and interface problems of said tubular body with other elements constituting the fluid conveying system.

A further object of the invention is to provide a fitting for pressurised fluid conveying of easy and economical realisation, suitable to be used in servomechanism systems or in cooling circuits of motor-cars.

In its more general aspect, the present invention allows to achieve these and still other objects which shall become clearer thanks to the following description, by providing a sealing gasket or a toric ring in correspondence of the mouth end of a tubular body and housing said ring or gasket in the conical flaring which the end of said body is provided with.

A fitting for fluid conveying pipings, especially pressurised fluids, comprising: a first tubular female body, a second coupling tubular male body, which can be connected with each other, and a first and a second grooves or seats for housing sealing gaskets or toric rings, said grooves or seats being located along the facing surfaces of said tubular bodies and said second groove or seat being located in correspondence of a conical flaring mouth, is known from US-A-3 990 730. Said fitting has the features of the preamble of claim 1.

The fitting of the present invention is characterised by the fact that the first tubular female body is provided with the conical flaring mouth and the second groove or seat is located in correspondence of said conical flaring mouth of the first female body and of the flat beat surface of the second tubular male body, when the tubular female and male bodies are inserted into one another.

In correspondence of said flared body of said first tubular body, the second tubular body is so shaped as to partly circumscribe said seat or groove.

In particular, when the second tubular male body is provided with a beat surface, the seat for the sealing gasket or toric ring obtained in correspondence of the flared mouth of said beat surface is circumscribed by said mouth and a groove obtained near said beat surface.

When both tubular bodies are provided with flanges and coupled in through-opening of said flanges circumscribed by at least an upsetting formed by one of the tubular bodies, the second tubular body is obtained in one only piece, extended into said opening without gaps and is provided with at least two grooves or seats for housing sealing gaskets or toric rings, at least one of said seats being obtained in correspondence of the conical flaring of the first tubular female body and is circumscribed by one of said upsettings and/or by one of said flanges.

The gasket or toric ring located in the seat corresponding to the flared conical mouth expands in said seat and exercises radial and longitudinal compressions along an inclined plane defined by the mouth, improving in this way the tightness of the fitting at high exercise pressures. Said coupling is an optimum one, as the toric ring or sealing gasket makes up for the possible tolerances that may exist between the two tubular bodies, expanding in all directions and causing therefore the fitting to be less sensitive to the possible variations in the diameter of the two tubular bodies.

The fitting of the present invention is compatible with the known ones and may be used as a replacement for the latter ones, which, as is known, are provided with one only sealing toric ring, and require frequent replacements due to an imperfect or an insufficient sealing.

According to a preferred embodiment of the present invention, the fitting for fluid conveying pipings of the present invention comprises:
- a tubular male body which in its external advanced portion has a configuration comprising a slightly funnel-shaped mouth, a flat beat surface spaced from said mouth, with an intermediate tubular part parallel to the axis of said tubular male body, said tubular male body being provided with a first groove for housing a first sealing toric ring in correspondence of said mouth and a second groove for housing a second toric sealing ring in correspondence of said flat beat surface, and
- a tubular female body which in its internal advanced portion has a cup or bell-shaped configuration, comprising a front part flat and perpendicular to its axis, with a conical flaring, a first tubular part parallel to the longitudinal axis of said tubular female body, a neck or tapering, and a second tubular rectilinear part also parallel to the longitudinal axis of said tubular female body.

In the functional coupling of said tubular female and male bodies, said first groove with the corresponding first toric sealing ring adjoins said first tubular rectilinear part; said second groove with the corresponding second toric sealing ring adjoins said conical flaring, and said flat beat surface of the tubular male body strikes said flat front part of the tubular female body.

According to a second preferred embodiment of the present invention, the fitting for fluid conveying pipings comprises a tubular female body and a tubular male body, partly superposed to one another and coupled by means of respective flanges circumscribed on at least a side by an upsetting formed on one of said tubular bodies, wherein at least one of said tubular bodies is obtained in one only piece, extending into the through-opening of the respective flange without gaps, and has at least two grooves or seats for housing sealing gaskets or toric rings, at least one of which is circumscribed on one side by one of said flanges or said upsettings.

The construction and functional characteristics of the fitting for fluid pipings of the present invention will be better understood from the following description, wherein reference is made to the figures of the attached drawings which represent a preferred non limiting embodiment solely given by way of example, and wherein:
Figure 1 is a schematic view of a section of the tubular female body of a first preferred embodiment of the present invention;
Figure 2 is a schematic view of a section of the tubular male body of the fitting of Figure 1;
Figure 3 is a schematic view of a section of the fitting composed by the coupling of said female and male tubular bodies of Figures 1 and 2;
Figure 4 is a schematic view of a section of a second embodiment of the fitting for fluid conveying pipings of the present invention, and
Figure 5 is a schematic view of a section of a further embodiment of the fitting for fluid conveying pipings of the present invention.

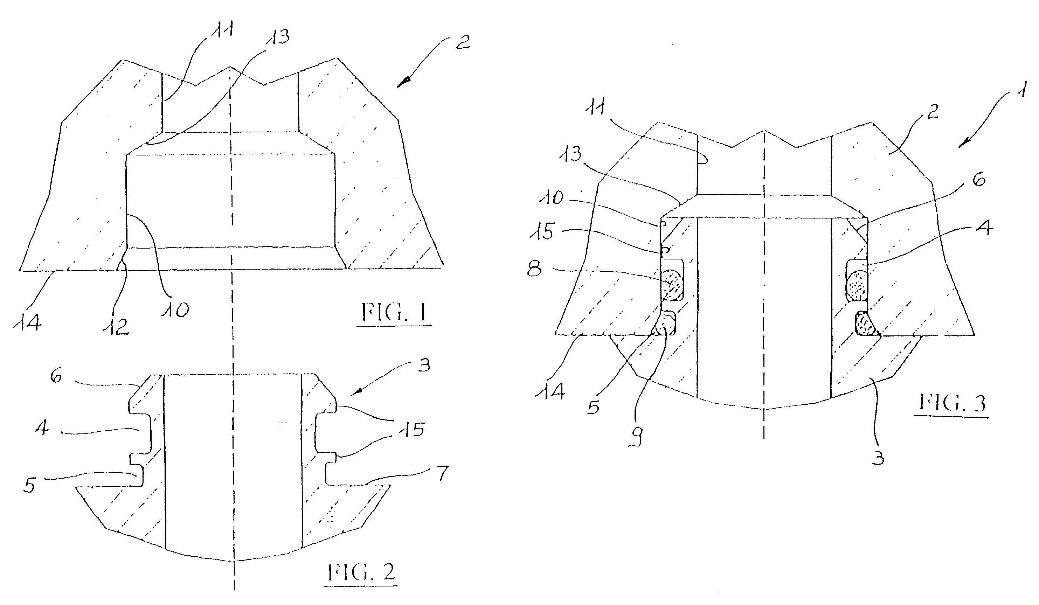

With special reference to Figures 1-3, the fitting for fluid conveying pipings of the present invention, indicated by 1, comprises a first tubular female body 2 and a second tubular male body 3. Said first tubular female body 2 has in its internal advanced portion a cup or bell-shaped configuration, circumscribed, from the front to the back part, by a flat front 14, a conic flaring 12, a first tubular rectilinear part 10, a tapering or neck 13, and a second tubular rectilinear part 11. Said first 10 and said second 11 tubular rectilinear parts are parallel arranged and co-axial to the longitudinal axis of the tubular female body 2.

The tubular male body 3 has, in its external advanced part, a front mouth 6 slightly conically funnel-shaped and a back flat beat surface 7 spaced from said mouth 6. Mouth 6 and the flat beat surface 7 are united by a tubular part 15 provided with a first groove 4, in correspondence of said mouth 6, and a second groove 5 in correspondence of said flat beat surface 7. The first groove 4, which may have a rectangular section or a section of any other suitable shape, houses a first toric sealing ring 8; and the second groove 5, which also may have an essentially rectangular shape, houses a second toric sealing ring 9.

Following the correct coupling of said tubular female 2 and male 3 bodies, said first groove 4, with the corresponding toric sealing ring 8, adjoins the first tubular rectilinear part 10 of body 2; while said second groove 5, with the corresponding toric sealing ring 9, is placed in correspondence of the conical flaring 12 of the same body. Besides, the flat surface 7 of the tubular male body 3 perfectly strikes the flat front 14 of said tubular female body 2.

Besides the above described shapes of the two tubular bodies 2 and 3, their size is so adjusted as to allow their partial insertion into one another. In particular, the first tubular rectilinear part 10 of the tubular female body 2 has an inner diameter slightly greater than the one of the tubular rectilinear part 15 of the tubular male body 3. The second tubular rectilinear part 11 of the tubular female body 2, of smaller size with respect to the first tubular rectilinear part 10, has an inner diameter equal to the inner diameter of the tubular male body 3. Besides, to ensure a correct tightness, the external diameter of said first 8 and second 9 toric sealing rings, made from elastic material, is slightly greater respectively than the internal diameter of the first tubular rectilinear part 10 and the corresponding conical flaring 12 of the tubular female body 2. In order to ensure the correct coupling and tightening of said fitting, on said tubular female 2 and male 3 bodies, a locking and tightening means is fitted on (not shown in the figure) of the type of threaded ring nut or with a bayonet joint, which prevents the axial sliding of the two tubular bodies.

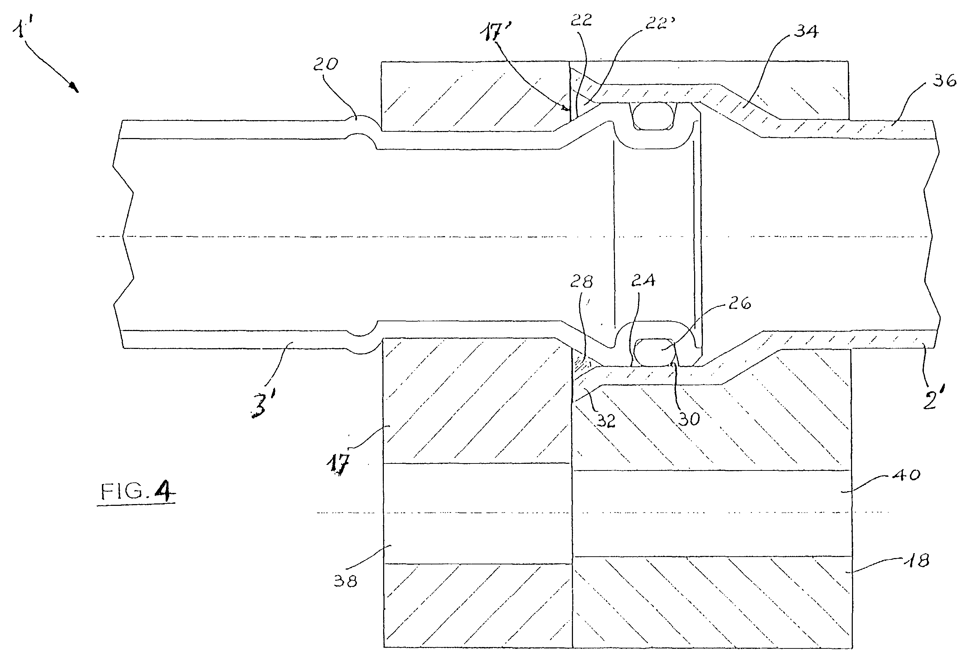

Figure 4 shows a second embodiment of the fitting of the present invention. Said fitting, indicated by 1', comprises a first tubular female body 2' from metal, coupled and connected to a flange 18, also preferably from metal, and a second tubular male body 3' from metal, coupled and connected to a flange 17. Said flanges 17 an 18 are the connecting means of said box-shaped bodies 2' and 3'.

According to the present invention, at least one of the tubular bodies, for instance the tubular male body 3', is constituted by a monobloc, being coupled and fastened to the respective flange 17 without gaps. Said tubular element has an external diameter complementary to that of the opening or through-hole formed in advance on flange 17 wherein it is inserted by hand or trough conventional automatic feed means. By means of widening punches inserted in the tubular element or of radially acting bushes, the external diameter of said tubular male body 3' is reduced by cold permanent set to a size such as to substantially adhere to the hole of flange 17.

Upstream and downstream of said flange 17, the tubular male body 3' is provided, respectively, with an upsetting 20 and a flared mouth zone 22, preferably obtained by means of like widening punches of like known means.

Beyond the flared opening 22 and near the end of the same, the tubular male body 3' circumscribes a groove 24, suitable to constitute the housing seat of a first gasket or toric ring 26. Said flared mouth 22, in co-operation with the end of one of the sides of flange 16, in the case in point the front side indicated by 17', forms a further seat 22' for housing a second gasket or sealing toric ring 28. Said side 17' of flange 17 which is positioned near groove 24 of the tubular body 3', forms a strike shoulder for the first tubular female body 2', fitted on the second tubular body 3', starting from its end zone integrating said groove 24.

The first tubular body 2' has obviously a diameter complementary to the external diameter of the tubular body 3', at least along the portion, indicated by 30 and rectilinearly extended, designed to superpose on the one whereon groove 24 is formed.

The front end of the tubular body 2' which strikes flange 17 is so shaped as to form an end flared mouth 32, while in the opposite part, behind said portion 30, the tubular body 2' is provided with a tapering 34 and a subsequent rectilinear portion 36. In the first tubular body 2', flange 18, designed to couple with flange 17 of the second tubular body 3', is preferably free, i.e. it is simply fitted on said body without welding. Said flange 18 is shaped in advance by mechanical workings along its internal surface for the precise coupling with the advanced part of the tubular body 2' which comprises the end flaring 32, the rectilinear portion 30 and the subsequent tapering 34. Both flanges 17 and 18 are provided with through-holes, respectively indicated by 38 and 40, aligned to one another for the insertion of conventional locking bolts or like means.

Fitting 1 of the present invention comprises therefore a second tubular body 3' in one only piece whereon two seats 22', 24 are obtained for as many gaskets or toric rings which ensure an optimum tightness. One of these seats, namely seat 22', is formed beyond flange 17, tangentially to the same and in correspondence of the flared mouth 32 of the first tubular body 2'. The flared surface of mouth 32, the flared surface of the first tubular body 2' and the front side of flange 17 form the bearing surfaces of gasket 18. In this way, the dimensional elongation of the tubular body 12 is prevented, which would be necessary and unavoidable, were another seat realised. of a conventional type, similar to groove 24. Because of flarings 22 of the first tubular body 12, and 32 of the second tubular body 16, seat 22' has a substantially triangular configuration, without excluding the possibility for this seat to have a different conformation.

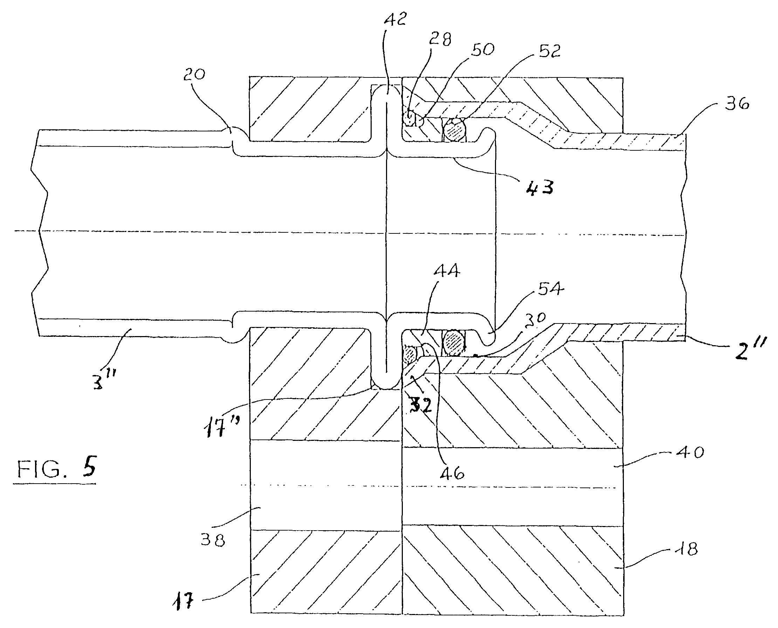

Figure 5, wherein the same numerals are maintained as the preceding Figure 4 as concern common parts or elements, schematically shows a further embodiment of the fitting of the present invention. According to this embodiment, the front end of the second tubular body 3", indicated by 43, has an external diameter markedly smaller than the internal diameter of the first tubular body 2" and beyond said end 43 a markedly extended upsetting 42 is formed. Flange 17, parallelly, has a stubbling 17" to contain said upsetting.

In order to form, along end 43 of the tubular body 3", two housing seats for as many gaskets or toric sealing rings, a shaped ring 44 is fitted on said end 43, in such a way as to adhere to upsetting 2. Said ring 44, which may be from metal, plastic or other suitable material, has an inner diameter complementary to the one of end 43 whereon it is fitted and a differentiated external diameter to form a stubbling 46, in correspondence of the flaring mouth of the first tubular body 2".

In particular, ring 44 is formed by a first sector whose maximum external diameter substantially corresponds to the internal diameter of the rectilinear portion 30 of the first tubular body 2", and by a second and integral sector having an external diameter smaller with respect to that of the same portion 30. Ring 44 is fitted on end 43 of the tubular body 3" with the smaller diameter sector oriented towards upsetting 42, which acts as a shoulder for the end flaring 32 of the first tubular body 2".

The first toric ring or gasket 28 is housed in seat 50 comprised between said flaring 32 of the first smaller diameter tubular body 2" and the smaller diameter sector of ring 44, while upsetting 42 forms one of the containment surfaces and completes said seat 50.

Before the shaped ring 44, a second gasket or toric ring 52 is located near mouth 54 of the second tubular body 3''. Said ring 52 is fitted on end 43 of the tubular body 3" and causes the further tightening between said body and the first tubular body 2". Gasket 52, in fact, has such a section as to be suitably compressed by the internal surface of the rectilinear portion 30 of said first tubular body 2". Mouth 54 of the second tubular body 3" is suitably flared to prevent the accidental unthreading of gasket 52. The housing seat of said gasket 52 is therefore circumscribed by the shaped ring 44 and the end 43 of the second tubular body 3" and is limited by the flared mouth 54.

Also in this embodiment, the presence of two toric rings or sealing gaskets 28 and 52 does not involve dimensional elongations of the second tubular body 3", as it is upsetting 42 that constitutes one of the walls of seat 50 of gasket 28. The second tubular body 3" is made, as in the preceding solution, in one only piece inserted in the through-opening of flange 17 and subsequently subjected to cold permanent sets to realise upsettings 20 and 42, the latter being more extended.

As can be inferred from the above, the advantages achieved by the present invention are evident. The fitting of the present invention, utilisable especially for cooling systems and servomechanisms of motor-cars, ensures the adequate and constant pressurisation of the fluid circulating in the system, thanks to the presence of the second groove and therefore a second toric sealing ring in a position corresponding to the conical flaring of the tubular female body, without having to elongating the tubular male body.

There is in this way obtained a saving in the material utilised and an ensuing reduction in manufacturing costs. Besides, by avoiding the dimensional modification of the tubular male body, no problems occur as concerns the assembly and interface problems with the other organs that constitute the fluid conveyance system.

Besides, the presence of two toric rings ensures a sealing with is particularly effective in the time. In particular, the second sealing ring, which strikes the conical stubbling or flaring of the tubular female body involves the further advantage of making up for possible tolerances that may exist between the two tubular male and female bodies, as the same is subjected to radial and well as longitudinal compression along the axis of the fitting.

Even though the present invention has been above described and illustrated with reference to some preferred embodiments, various changes and variants may be introduced, given the teachings that may be inferred from the above description. Hence, the present invention, also comprises all the changes and variants which fall within the protection scope of the following claims.

## Claims

1. A fitting for fluid conveying pipings, especially pressurised fluids, particularly suitable for use in motor-cars systems, comprising:
- a first tubular female body (2, 2', 2");
- a second tubular male body (3, 3', 3") provided with a flat beat surface (7), said first and second tubular bodies (2, 2', 2", 3, 3', 3") being coupled and partially inserted into one another, and
- a first (4, 24) and a second (5, 22', 50) grooves or seats for housing sealing gaskets or toric rings (8, 9, 26, 28, 52), said grooves or seats being located along the facing surfaces of said tubular bodies (2, 2', 2", 3, 3', 3") and said second groove or seat (5, 22', 50) being located in correspondence of a conical flaring mouth;
**characterised in that** the first tubular female body (2, 2', 2") is provided with the conical flaring mouth (12, 32) and the second groove or seat (5, 22', 50) is located in correspondence of said conical flaring mouth (12, 32) of the first female body (2, 2', 2") and of the flat beat surface (7) of the second tubular male body (3), when the tubular female and male bodies are inserted into one another.

2. The fitting according to claim 1, **characterised in that** the groove or seat (5, 22', 50) located in correspondence of the flaring mouth (12, 32) of the first female body (2, 2', 2") is delimited by said flaring mouth, by the beat surface (7) of the second male body (3, 3', 3") and by a groove (5) provided in said second male body near said beat surface (7).

3. The fitting according to claim 1 or 2, wherein the tubular male body (3), in its advanced external portion, is so conformed as to comprise a funnel-like slightly conified mouth (6), a flat beat surface (7), spaced from said mouth (6) and an intermediate tubular portion (15), parallel to the axis of said tubular male body (3), provided with a first groove (4) for housing a first sealing toric ring (8) in correspondence of said mouth (6) and a second groove (5) for housing a second sealing toric ring (9) in correspondence of said flat beat surface (7).

4. The fitting according to anyone of the preceding claims, wherein the tubular female body (2) has a cup or bell-like shape and comprises a flat front (14) perpendicular to the axis of said tubular female body (2); a conical flaring (12); a first rectilinear tubular part (10) parallel to the longitudinal axis of said tubular female body (2); a neck or tapering (13), and a second rectilinear tubular part (11) also parallel to the longitudinal axis of said tubular female body (2); in the coupling of said tubular female body (2) with the male one (3), the first groove (4) with the corresponding sealing toric ring (8) adjoining said first rectilinear tubular part (10); the second groove (5) with the corresponding sealing toric ring (9) adjoining said conical flaring (12) and the flat beat surface (7) of the tubular male body (3) striking the flat front (14) of the tubular female body (2).

5. The fitting according to anyone of the preceding claims, wherein the external diameter of the first and the second sealing toric rings (8, 9) is greater than the diameter of the first rectilinear tubular part (10) of said tubular female body (2).

6. The fitting according to claim 1, wherein the first tubular body (2', 2") and the second tubular body (3', 3") are provided with connecting flanges (17, 18), circumscribed on at least one side with an upsetting (20, 42) obtained on one of said tubular bodies (2, 2", 3', 3"), and at least the tubular male (3') body is made in one only piece, extending into the through-opening of the respective flange (17) without gaps, and has at least two grooves or seat (24, 22', 46) for housing sealing gaskets or toric rings (26, 28, 52), at least one of then being obtained in correspondence of the conical flaring (32) of the first tubular body (2') and circumscribed on one side by one of said flanges ( 17') or one of said upsettings (22, 42).

7. The fitting according to claim 6, **characterised in that** the second tubular body (3') has a flaring mouth (22), comprised between upsetting (20) and groove (24), forming a delimitation wall of seat (22') of gasket (28).

8. The fitting according to claim 6 or 7, wherein the second tubular body (3', 3") inserted in the through-opening of the respective flange (17), is subjected to cold permanent sets which cause it to adhere, with its external surface, to said through-opening and create on said second tubular body said upsettings (20, 42), said flared mouth (22, 54) and said groove (24).

9. The fitting according to anyone of the preceding claims from 6 to 8, wherein the front end (43) of the second tubular body (3") has a flared mouth (54) and an external diameter markedly smaller with respect to the inner diameter of the first tubular body (2"), the upsetting (42) being such as to form a strike wall of the flaring mouth (32) of the first tubular body (2").

10. The fitting according to claim 9, wherein a shaped ring (44) constituted by a greater diameter first sector substantially equal to the inner diameter of the rectilinear portion (30) of the first tubular body (2") and by a second and integral smaller diameter sector with respect to that of the same portion (30), is fitted on end (43) of the second tubular body (3"); said smaller diameter sector being facing and striking the upsetting (42); the gasket or toric ring (28) being fitted on the same.

11. The fitting according to claim 9 or 10, **characterised in that** flange (17) has a stubbling (17") containing the upsetting (42).

## Patentansprüche

1. Ein Verbindungsstück für Rohrleitungen, insbesondere für unter Druck gesetzte Flüssigkeiten, das besonders geeignet ist zum Gebrauch in Kraftfahrzeugsystemen, umfassend
- einen ersten, rohrförmigen Hohlkörper (2, 2', 2"),
- einen zweiten, rohrförmigen Einsteckkörper (3, 3', 3"), der mit einer flachgeschmiedeten Fläche (7) versehen ist, wobei der erste und der zweite rohrförmige Körper (2, 2', 2", 3, 3', 3") miteinander gekuppelt und teilweise ineinander eingesetzt sind, und
- eine erste (4, 24) und eine zweite (5, 22', 50) Nute oder Auflage zum Unterbringen von Dichtungsmanschetten oder wulstförmigen Ringen (8, 9, 26, 28, 52), wobei die Nuten oder Auflagen längs der sich gegenüberliegenden Flächen der rohrförmigen Körper (2, 2', 2", 3, 3', 3") angeordnet sind und die zweite Nute oder Auflage (5, 22', 50) konform mit einem kegelförmigen sich nach außen erweiternden Mund angeordnet ist,
**dadurch gekennzeichnet, dass** der rohrförmige Hohlkörper (2, 2', 2") mit dem kegelförmigen sich nach außen erweiternden Mund (12, 32) versehen ist und die zweite Nute oder Auflage (5, 22', 50) angeordnet ist konform mit dem kegelförmigen sich nach außen erweiternden Mund (12, 32) des Hohlkörpers (2, 2', 2") und der flachgeschmiedeten Fläche (7) des rohrförmigen Einsteckkörpers (3), wenn die rohrförmigen Hohl- und Einsteckkörper ineinander eingesetzt sind.

2. Das Verbindungsstück nach Anspruch 1, **dadurch gekennzeichnet, dass** die Nute oder Auflage (5, 22', 50), die konform mit dem kegelförmigen sich nach außen erweiternden Mund (12, 32) des Hohlkörpers (2, 2', 2") angeordnet ist, abgegrenzt wird durch den sich nach außen erweiternden Mund, durch die geschmiedete Fläche (7) des Einsteckkörpers (3, 3', 3") und durch eine Nute (5), die versehen ist in dem Einsteckkörper bei der geschmiedeten Fläche (7).

3. Das Verbindungsstück nach Anspruch 1 oder 2, wobei der rohrförmige Einsteckkörper (3) in dem hervorstehenden Außenabschnitt so angepasst ist, dass er umfasst einen trichterartigen leicht kegelförmigen Mund (6), eine flachgeschmiedete Fläche (7), die von dem Mund (6) beabstandet ist, und einen dazwischenliegenden rohrförmigen Abschnitt (15) parallel zu der Achse des rohrförmigen Einsteckkörpers (3), der versehen ist mit einer ersten Nute (4) zum Unterbringen eines ersten abdichtenden wulstförmigen Ringes (8), der konform ist mit dem Mund (6), und mit einer zweiten Nute (5) zum Unterbringen eines zweiten abdichtenden wulstförmigen Ringes (9), der konform ist mit der flachgeschmiedeten Fläche (7).

4. Das Verbindungsstück nach irgendeinem der vorhergehenden Ansprüche, wobei der rohrförmige Hohlkörper (2) eine tassen- oder glockenartige Form aufweist und umfasst eine flache Stirnseite (14) senkrecht zu der Achse der rohrförmigen Hohlkörper (2), eine kegelförmige Erweiterung (12), einen ersten geradlinigen rohrförmigen Teil (10), der parallel zur Längsachse des rohrförmigen Hohlkörpers (2) angeordnet ist, einen Hals oder Verjüngungsstelle (13), und einen zweiten geradlinigen rohrförmigen Teil (11), der auch parallel zur Längsachse des rohrförmigen Hohlkörpers (2) angeordnet ist, wobei bei der Kupplung des rohrförmigen Hohlkörpers (2) mit dem Einsteckkörper (3), die erste Nute (4) mit dem entsprechenden abdichtenden wulstförmigen Ring (8) an den ersten geradlinigen rohrförmigen Teil (10) angrenzt, die zweite Nute (5) mit dem entsprechenden abdichtenden wulstförmigen Ring (9) an die kegelförmige Erweiterung (12) angrenzt, und die flachgeschmiedete Fläche (7) des rohrförmigen Einsteckkörpers (3) gegen die flache Stirnseite (14) des rohrförmigen Hohlkörpers (2) anschlägt.

5. Das Verbindungsstück nach irgendeinem der vorhergehenden Ansprüche, wobei der Außendurchmesser des ersten und des zweiten abdichtenden wulstförmigen Ringes (8, 9) größer ist als der Durchmesser des ersten geradlinigen rohrförmigen Teils (10) des rohrförmigen Hohlkörpers (2).

6. Das Verbindungsstück nach Anspruch 1, wobei der erste rohrförmige Körper (2', 2") und der zweite rohrförmige Körper (3', 3") versehen sind mit Verbindungsflanschen (17, 18) und abgegrenzt an mindestens eine Seite durch eine Anstauchung (20, 42), die an einem der rohrförmigen Körper (2, 2", 3', 3") erhalten wird, und mindestens der rohrförmige Einsteckkörper (3') einstückig gefertigt ist und sich in das Durchgangsloch des entsprechenden Flansches (17) ohne Zwischenräume erstreckt und mindestens zwei Nuten oder Auflagen (24, 22', 46) aufweist zum Unterbringen von Dichtungsmanschetten oder wulstförmigen Ringen (26, 28, 52), wobei mindestens eine/einer davon erhalten wird konform mit der kegelförmigen Erweiterung (32) des ersten rohrförmigen Körpers (2') und an einer Seite abgegrenzt wird durch einen der Flanschen (17') oder eine der Anstauchungen (22, 42).

7. Das Verbindungsstück nach Anspruch 6, **dadurch gekennzeichnet, dass** der zweite rohrförmige Körper (3') einen sich erweiternden Mund (22) aufweist, der zwischen der Anstauchung (20) und der Nute (24) angeordnet ist und dabei eine Abgrezungswand der Auflage (22') der Dichtungsmanschette (28) bildet.

8. Das Verbindungsstück nach Anspruch 6 oder 7, wobei der zweite rohrförmige Körper (3', 3"), wenn er in dem Durchgangsloch des entsprechenden Flansches (17) eingesetzt ist, kalten bleibenden Verformungen ausgesetzt wird, die veranlassen, dass er mit der Außenfläche an dem Durchgangsloch haftet und an dem zweiten rohrförmigen Körper die Anstauchungen (20, 42), den sich erweiternden Mund (22, 54) und die Nute (24) bildet.

9. Das Verbindungsstück nach einem der vorhergehenden Ansprüchen 6 bis 8, wobei die Stirnseite (43) des zweiten rohrförmigen Körpers (3") einen sich erweiternden Mund (54) und einen Außendurchmesser aufweist, der deutlich kleiner ist im Hinblick auf den Innendurchmesser des ersten rohrfömigen Körpers (2"), wobei die Anstauchung (42) so gebildet ist, dass sie eine Anschlagwand des sich erweiternden Mundes (32) des ersten rohrförmigen Körpers (2") bildet.

10. Das Verbindungsstück nach Anspruch 9, wobei ein geformter Ring (44), der gebildet wird durch einen ersten Abschnitt größeren Durchmessers, der im wesentlichen gleich ist dem Innendurchmesser des geradlinigen Abschnitts (30) des ersten rohrförmigen Körpers (2") und durch einen zweiten, einteiligen Abschnitt kleineren Durchmessers im Hinblick auf den desselben Abschnitts (30), an dem Ende (43) des zweiten rohrförmigen Körpers (3") angebracht ist, wobei der Abschnitt kleineren Durchmessers der Anstauchung (42) gegenüberliegt und gegen diese anschlägt, und wobei die Dichtungsmanschette oder der wulstförmige Ring (28) an derselben angebracht ist.

11. Das Verbindungsstück nach Anspruch 9 oder 10, **dadurch gekennzeichnet, dass** der Flansch (17) eine Stoppelung (17") aufweist, die die Anstauchung (42) enthält.

## Revendications

1. Raccord pour canalisations de transport de fluides, spécialement de fluides sous pression, convenant en particulier pour une utilisation dans des systèmes automobiles comprenant :
- un premier corps tubulaire femelle (2, 2', 2") ;
- un deuxième corps tubulaire mâle (3, 3', 3") pourvu d'une surface de frappe plane (7), lesdits premier et deuxième corps tubulaires (2, 2', 2", 3, 3', 3") étant couplés et partiellement insérés l'un dans l'autre, et
- une première (4, 24) et une deuxième (5, 22', 50) rainures ou sièges pour loger des garnitures d'étanchéité ou des joints toriques (8, 9, 26, 28, 52), lesdites rainures ou sièges étant situés le long des surfaces de contact desdits corps tubulaires (2, 2', 2", 3, 3', 3") et ladite deuxième rainure ou siège (5, 22', 50) étant située en correspondance d'une embouchure d'évasement conique ;
**caractérisé en ce que** le premier corps tubulaire femelle (2, 2', 2") est pourvu de l'embouchure d'évasement conique (12, 32) et que la deuxième rainure ou siège (5, 22', 50) est située en correspondance de ladite embouchure d'évasement conique (12, 32) du premier corps femelle (2, 2', 2") et de la surface de frappe plane (7) du deuxième corps tubulaire mâle (3), lorsque les corps tubulaires femelle et mâle sont insérés l'un dans l'autre.

2. Raccord selon la revendication 1, **caractérisé en ce que** la rainure ou siège (5, 22', 50) située en correspondance de l'embouchure d'évasement (12, 32) du premier corps femelle (2, 2', 2") est délimitée par ladite embouchure d'évasement, par la surface de frappe (7) du deuxième corps mâle (3, 3', 3") et par une rainure (5) prévue dans ledit deuxième corps mâle à proximité de ladite surface de frappe (7).

3. Raccord selon la revendication 1 ou 2, dans lequel le corps tubulaire mâle (3) est conformé, dans sa partie extérieue avancée, de manière à comprendre une embouchure légèrement conifiée de type entonnoir (6), une surface de frappe plane (7) espacée de ladite embouchure (6), et une partie tubulaire intermédiaire (15), parallèle à l'axe dudit corps tubulaire mâle (3), pourvu d'une première rainure (4) pour loger un premier joint torique d'étanchéité (8) en correspondance de ladite embouchure (6) et d'une deuxième rainure (5) pour loger un deuxième joint torique d'étanchéité (9) en correspondance de ladite surface de frappe plane (7).

4. Raccord selon l'une quelconque des revendications précédentes, dans lequel le corps tubulaire femelle (2) a une coupelle ou une forme de type cloche et comprend une face plate (14) perpendiculaire à l'axe dudit corps tubulaire femelle (2) ; un évasement conique (12) ; une première partie tubulaire rectiligne (10) parallèle à l'axe longitudinal dudit corps tubulaire femelle (2) ; un collet ou une conicité (13), et une deuxième partie tubulaire rectiligne (11) également parallèle à l'axe longitudinal dudit corps tubulaire femelle (2) ; dans l'accouplement dudit corps tubulaire femelle (2) avec celui mâle (3), la première rainure (4) avec le joint torique d'étanchéité (8) correspondant étant attenante à ladite première partie tubulaire rectiligne (10) ; la deuxième rainure (5) avec le joint torique d'étanchéité (9) correspondant étant attenante audit évasement conique (12) et la surface de frappe plane (7) du corps tubulaire mâle (3) touchant la face plate (14) du corps tubulaire femelle (2).

5. Raccord selon l'une quelconque des revendications précédentes, dans lequel le diamètre extérieur des premier et deuxième joints toriques d'étanchéité (8, 9) est supérieur au diamètre de la première partie tubulaire rectiligne (10) dudit corps tubulaire femelle (2).

6. Raccord selon la revendication 1, dans lequel le premier corps tubulaire (2', 2") et le deuxième corps tubulaire (3', 3") sont pourvus de brides de connexion (17, 18), circonscrites sur au moins un côté par un refoulement (20, 42) obtenu sur l'un desdits corps tubulaires (2', 2", 3', 3"), et au moins le corps tubulaire mâle (3') est fait d'une seule pièce, s'étendant dans l'ouverture débouchante de la bride respective (17) sans écartements, et a au moins deux rainures ou sièges (24, 22', 46) pour loger des garnitures ou des joints toriques d'étanchéité (26, 28, 52), au moins l'un d'eux étant obtenu en correspondance de l'évasement conique (32) du premier corps tubulaire (2') et circonscrit sur au moins un côté par l'une desdites brides (17') ou l'un desdits refoulements (22, 42).

7. Raccord selon la revendication 6, **caractérisé en ce que** le deuxième corps tubulaire (3') a une embouchure d'évasement (22) comprise entre le refoulement (20) et la rainure (24), formant une paroi de délimitation du siège (22' ) de garniture (28).

8. Raccord selon la revendication 6 ou 7, dans lequel le deuxième corps tubulaire (3', 3") inséré dans l'ouverture débouchante de la bride respective (17) est soumis à des déformations permanentes à froid qui l'amènent à adhérer, avec sa surface extérieure, à ladite ouverture débouchante et à créer sur ledit deuxième corps tubulaire lesdits refoulements (20, 42), ladite embouchure évasée (22, 54) et ladite rainure (24).

9. Raccord selon l'une quelconque des revendications 6 à 8, dans lequel l'extrémité avant (43) du deuxième corps tubulaire (3") a une embouchure évasée (54) et un diamètre extérieur sensiblement inférieur au diamètre intérieur du premier corps tubulaire (2"), le refoulement (42) étant tel qu'il forme une paroi de contact de l'embouchure d'évasement (32) du premier corps tubulaire (2").

10. Raccord selon la revendication 9, dans lequel l'anneau profilé (44), constitué par un premier secteur de diamètre supérieur fondamentalement égal au diamètre intérieur de la partie rectiligne (30) du premier corps tubulaire (2") et par un deuxième secteur intégral de diamètre inférieur à celui de la même partie (30), est placé sur l'extrémité (43) du deuxième corps tubulaire (3") ; ledit secteur de diamètre inférieur faisant face et touchant le refoulement (42) ; la garniture ou le joint torique (28) étant placé sur cette même extrémité.

11. Raccord selon la revendication 9 ou 10, **caractérisé en ce que** la bride (17) a un décrochement (17") contenant le refoulement (42).
